# EUROPEAN PATENT SPECIFICATION

(11) **EP 2 101 582 B1**
(45) Date of publication and mention of the grant of the patent: **29.03.2017**
(21) Application number: 07804348.6
(22) Date of filing: 24.09.2007
(51) Int. Cl.: A01N 59/00, A01N 37/36, A01P 3/00

(54) **AGRICULTURAL TREATMENT**
LANDWIRTSCHAFTLICHE BEHANDLUNG
TRAITEMENT AGRICOLE

(30) Priority: 22.09.2006 GB 0618711
(43) Date of publication of application: 23.09.2009
(73) Proprietor: UNIVERSITY OF EXETER, Exeter, Devon EX4 4QJ (GB)
(72) Inventor: BENJAMIN, Nigel, Plymouth PL6 8BU (GB); TALBOT, Nicholas, Jose, Exeter EX4 4QD (GB); KERSHAW, Michael, John, Exeter EX4 4QD (GB); WINYARD, Paul, Graham, EX1 2LU (GB)
(74) Representative: Bumke, Jakob Wenzel
(86) International application number: PCT/GB2007/003571
(87) International publication number: WO 2008/035079

(56) References cited:
- WO-A-99/15022
- WO-A-99/43822
- WO-A-2004/066732
- WO-A-2005/037219
- WO-A-2006/010896
- US-B1- 6 242 384
- E.E. LAZAR ET AL.: "Antifungal effect of gaseous nitric oxide on mycelium growth, sporulation and spore germination of the postharvest horticulture pathogens, Aspergillus niger, Monilinia fructicola, and Penicillium italicum" LETTERS IN APPLIED MICROBIOLOGY, vol. 46, 2008, pages 688-692, XP007906126
- JENNIFER WANG AND VERNA J. HIGGINGS: "Nitric oxide has a regulatory effect in the germination of conidia of Colletotrichum coccodes" FUNGAL GENETICS AND BIOLOGY, vol. 42, 2005, pages 284-292, XP004769551
- GRADY E.N. ET AL: 'EFFECT OF SIMULATED SULFURIC ACID RAIN ON YIELD, GROWTH AND FOLIAR INJURY OF SEVERAL CROPS*' INTERNET ARTICLE, [Online] 01 January 1981, pages 171 - 185, XP55196748 Retrieved from the Internet: <URL:http://ac.els-cdn.com/0098847281900241 /1-s2.0-0098847281900241-main.pdf?_tid=a1be ff30-159b-11e5-ac78-00000aacb360&acdnat=143 4619568_4b88dbcc68656beeb985d16746d699fb> [retrieved on 2015-06-18]
- ZHANG FUZHU ET AL: 'Effects of simulated acid rain on the injury and physiological responses of crops' JOURNAL OF ENVIRONMENTAL SCIENCES, [Online] 01 January 1994, pages 87 - 92, XP55196751 Retrieved from the Internet: <URL:http://www.jesc.ac.cn/jesc_en/ch/reade r/create_pdf.aspx?file_no=19940110> [retrieved on 2015-06-18]

## Description

The present invention relates to methods for treating or preventing plant diseases caused by pathogenic organisms, such as fungi, oomycetes and other microorganisms.

Acidification of nitrite produces nitrous acid which decomposes to form oxides of nitrogen, including nitric oxide as shown in equations 1 to 3. At a given pH the quantity of nitrogen oxides generated *in vitro* is dependent on the nitrite concentration.

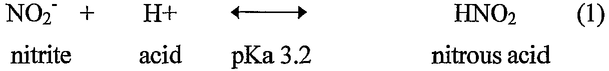

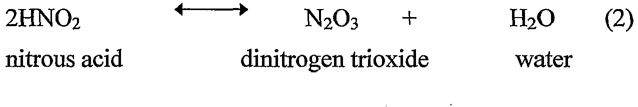

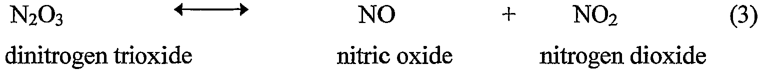

These reactive nitrogen intermediates have been shown to have cytotoxic properties. Nitric oxide inhibits respiratory chain enzymes through inactivation of iron-sulphur complexes and disrupts DNA replication by inhibiting ribonucleotide reductase. Its toxicity has been shown against a number of micro-organisms as well as for tumour cells. However, the antibiotic properties of acidified nitrite are believed to be due to an additive effect of all of these reactive intermediates, though the mechanism and sites of action of the products released are unknown.

Acidified nitrite has been shown to have anti-bacterial activity against *Helicobacter pylori* the commonest bacterial pathogen worldwide which causes chronic gastritis and is associated with gastric and duodenal ulcers. It has been shown to be effective in treating the Buruli ulcer, a serious skin disease common in many tropical countries, caused by *Mycobacterium ulcerans*)*.* Acidified nitrite has been shown to be effective against a virus which causes the skin disease, Molluscum contagiosum (Br J. Dermatol. 1999 Dec: 141 (6): 1051-3) and also to be active against a range of medically important fungi including *Candida albicans, Cryptococcus neoformans and Aspergillus fumigatus* (Anyim, et al. 2005 Int J Antimicrob Agents. 26(1):85-7). Fungal mycoses are an increasing problem in immuno-compromised patients. Most infections occur through inhalation of fungal spores prior to colonisation of the lungs. A means of administering an aerosol version of acidified nitrite treatment directly to the lung has been shown to be both effective and safe. In addition all attempts to generate resistance to acidified nitrite by UV mutagenesis or repeated passage in sub-inhibitory concentrations in a wide range of species have proved unsuccessful (Anyim, *et al*. 2005 supra.).

There are several mechanisms by which acidified nitrite might kill fungi. Nitrite at acidic pH forms a number of oxides of nitrogen, including nitric oxide and nitrogen dioxide, both very reactive species. Nitric oxide is a well-recognised signalling molecule and has been shown to be involved in a number of physiological processes. It is produced *in vivo* by eukaryotic cells via nitric oxide synthase and can regulate protein function by nitrosylation of cysteine thiols and transition metal centres. The NO-related post-translational modification of proteins is also used to fight infection by bacteria, viruses, fungi and cancer cells. Nitrogen oxides produced by phagocytic cells have also been strongly implicated in antimicrobial defence. Increased NO production can be demonstrated in animal models at sites of infection such as toxoplasmosis and leishmaniasis or in human infections such as tuberculosis. In fighting infection, NO-mediated nitrosylation can disrupt the function of critical proteins in proliferating microbial cells, by the modifying thiol and metal centres. It can inhibit respiratory chain enzymes through inactivation of iron-sulphur complexes, and disrupts DNA replication by inhibiting ribonucleotide reductase. NO-related antimicrobial activity has been demonstrated against a broad range of pathogenic micro-organisms including viruses, bacteria, fungi and parasites (De Groote and Fang, 1995 Clin Infect Dis. 21 S162-5).

Acidified nitrite also generates dinitrogen trioxide, a powerful nitrosating agent that will rapidly react with reduced thiols to form nitrosothiols, thought to be important in microbial killing. Nitric oxide will react rapidly with superoxide to form peroxynitrite, a powerful oxidising and nitrating agent (Dykuizen, et al. 1996 Antimicrob Agents Chemother. 40(6):1422-5). Peroxynitrite can also be formed from the combination of nitrous oxide (HNO₂) and hydrogen peroxide (H₂O₂). Reaction products such as peroxynitrite can have a greater cytotoxic potential than NO or superoxide alone. Interestingly a number of fungi, including *M. grisea* have been shown to generate superoxide during infection related development, which is thought to be involved in differentiation and oxidative cross linking of cell wall components.

Dosage forms suitable for pharmaceutical use of acidified nitrite are described for example in WO95/22335.

Acidified nitrite has not hitherto been widely used in agricultural applications, and the volatility and reactivity of the active species would be expected to be a problem in such applications. For instance, although the reactive nitrogen intermediates generated by the acidification of nitrite are highly toxic, they are thought to dissipate fairly rapidly, and in an environmental situation, where they are subject to the atmosphere or complex chemical compositions such as are found in soil, it is thought that the active species would not be present long enough to produce a useful effect. In addition, nitric oxide in particular has been reported as causing plant cell death and therefore it may not be expected that it could be applied in such a way as to kill the plant pathogen, without also killing the plant.

WO2005/037219 and WO2004/066732 disclose disinfecting compositions comprising nitrous acid, used for example for disinfecting mammalian skin, wounds and inanimate surfaces.

WO2006/010896 describes the use of compositions comprising nitric oxide generating agents for increasing production of and/or retention of a plant organ. However, the concentrations of nitrite recommended for this application is low, less than 2mM, at which concentration it is not able to positively kill for example fungal spores.

The applicants have found however that acidified nitrite treatment can be successfully applied in agriculture, including directly to plants to provide prophylaxis and treatment of diseases caused by microorganisms and in particular, fungal plant pathogens or oomycetes. Surprisingly, it has been possible to identify application regimes and concentrations which are highly effective in killing or controlling microorganisms, fungi or oomycetes and do not result in death of the plants themselves.

Thus the present invention provides a method for the control of microorganisms, fungi or oomycetes in agriculture, said method comprising applying to growing plants an anti-microbial, anti-fungal or anti-oomycetes effective amount of a combination of:
(i) an agriculturally acceptable acidifying agent, and
(ii) an agriculturally acceptable source of nitrite ions or a nitrate precursor thereof, wherein the agriculturally acceptable acidifying agent is in the form of a buffer solution and wherein combination of (i) and (ii) has a pH of between 3.0 and 6.5 and acts as a source of nitric oxide.

By treating the plant in this way, microorganisms (such as bacteria or viruses), fungi or oomycetes responsible for plant diseases, and in particular fungal organisms, including fungal spores, can be killed or controlled. In particular, the treatment acts as an effective anti-penetrant fungicide. Furthermore it appears to kill fungal spores (i.e. is fungitoxic) rather than simply inhibit their growth.

Furthermore, the by-products of the treatment are themselves, agriculturally acceptable. The treatment leaves no pesticidal residues as such. The nitrogen products such as nitrogen dioxide and nitric oxide are oxidised in the environment to form inorganic nitrates, which act as fertilisers.

Elements (i) and (ii) can be applied separately to the growing plant or the environment, so that they admix *in situ.* For example, plants may first be sprayed with an agriculturally acceptable acidifying agent, and subsequently sprayed with an agriculturally acceptable source of nitrite ions or a nitrate precursor thereof or vice versa.

Preferably however, elements (i) and (ii) are applied as a single active mixture.

As used herein, the term "active mixture" refers to a mixture of (i) and (ii) which retains antifungal or antimicrobial activity. In general, such mixtures will be active for a limited period of time after preparation because the active species tend to degrade and volatilise. The precise time in which activity is retained depends upon various factors including the precise nature of the components used in the mixture, the concentration of these and the ambient temperature etc.. These can be determined using routine testing for example as illustrated hereinafter. However, typically active mixtures are for instance, less than 4 hours old, more suitably less than 2 hours old, and in particular no more than 1 hour (60 minutes) from admixture.

However, the fact that the components can be admixed together in this way prior to use and retain activity for some time is a surprising feature, bearing in mind the short lived nature of the active species. However, this has implications for the use of acidified nitrite as an agricultural treatment such as a fungicide, in that it provides a degree of flexibility in the time between formulating the fungicide and its application. This is particularly useful in an agricultural scenario, and in particular where foliar spraying is undertaken. It means that a farmer can admix the components in a spray tank prior to use, and provided the contents are used whilst the mixture is still active, for example within a period of one hour, depending upon the conditions, such as the temperature etc., activity is retained.

In one embodiment, the mixture will be sprayed directly onto plants such as crops by way of a foliar spray. In this embodiment, a subsequent washing step, in which water is sprayed onto the plants to wash off residual material, may be carried out in order to minimise any phytotoxicity or bleaching effects of the treatment. The subsequent step may be carried out after a period of time sufficient to allow the treatment to have effect in killing or controlling fungi, fungal spores or other microorganisms on the surface of the leaf. This will vary depending upon factors such as the nature of the fungi, fungal spore or microorganism, as well as the crop being treated and the prevailing weather conditions. However, in general, the subsequent step will be carried out within a period of less than 5 hours, for instance less than 2 hours and suitably at about one hour after application.

Suitable plants include monocotyledonous plants such as cereals including barley, wheat, maize, finger millet, pearl millet, triticale, rye grass and rice, as well as dicotylendous crops such as fruits, vegetables and nuts. However, as used herein, the expression "plants" is intended to include all growing crops, including for example edible fungi.

The applicants have found that the lower the pH of agriculturally acceptable acidifying agent, the more effective the treatment is at killing or controlling fungi or other microorganism. In particular, at low pH, target organisms such as the fungal spores become more intolerant to the nitrite and therefore, the lower the pH, the lower the concentration of the agriculturally acceptable source of nitrite ions or a nitrate precursor thereof required to achieve the desired level of control. However, the acid tolerance of any plants being treated in this way may need to be taken into account, to avoid excessive bleaching or scorch.

Suitably the agriculturally acceptable acidifying agent is an agriculturally acceptable acid, and in particular an agriculturally acceptable organic acid such as citric acid, salicylic acid, ascorbic acid, acetic acid, fulvic acid, lactic acid, glycolic acid or humic acid, as well as agriculturally acceptable inorganic acids such as phosphoric acid, hydrochloric acid, nitric acid and sulphuric acid.

Suitable agriculturally acceptable sources of nitrite ions or a nitrate precursor thereof may include a ferment or compost composition, for example one which has been obtained by fermentation of nitrate-containing organic matter. Such sources have the benefit of being environmentally friendly, and can be regarded as organic sources. Particular ferments or composts may suitably comprise sources which are known to be rich in nitrate, and which degrade to nitrite on storage, such as spinach, beetroot and lettuce, and in particular, beetroot.

These sources may be artificially replicated for example by preparing a system comprising a source of ammonia and bacteria, especially soil bacteria such as Nitrosomonas and Nitrococcus, that convert ammonia into nitrite.

Alternatively, the agriculturally acceptable source of nitrite ions or a nitrate precursor thereof is an alkali or alkaline earth metal nitrite or nitrate, such as sodium nitrite, sodium nitrate, potassium nitrite or potassium nitrate.

The amount of agriculturally acceptable sources of nitrite ions or a nitrate precursor thereof required will vary depending upon factors such as the nature of the condition being treated or prevented, the particular crop or environment being treated and in particular the pH etc. These can be determined using procedures such as those outlined hereinafter in the examples.

Generally however, the concentration of the nitrite ions to kill for example fungal spores is at least 2mM, for example from 2mM to 5M, for example from 2mM to 1M. Such rates may be achieved by application of the composition at rates of from 1 to 3000 litres/hectare, for example from 20 to 1000 litres/hectare, depending upon the concentration of the nitrite ions within the composition. For instance, at pH 3, concentrations of nitrite ions of 2mM may kill spores such as those of *Magnaporthe griesea,* whereas a concentration of 8mM may be required to kill Botrytis cinerea.

Where the agriculturally acceptable source of nitrite ions or a nitrate precursor thereof comprises a compost or ferment, where the concentration of nitrite ions may be relatively low compared to that which is found in a chemical reagent, the amount of such material as compared to the amount of agriculturally acceptable acidifying agent will have to be adjusted accordingly.

The relative amount of the acid to agriculturally acceptable source of nitrite ions or a nitrate precursor thereof will also vary depending upon factors such as the nature of the components. It is preferable to include an active concentration of nitrite ions as described above, and then include sufficient acid to ensure that the required pH level, also discussed above, is achieved.

Whether they are applied individually or in admixture, components (i) and (ii) may be suitably combined with an agriculturally acceptable carrier such as water prior to application.

Components (i) and (ii) may be individually formulated for example as powders, water dispersible granules, slow or fast release granules, soluble concentrates, oil miscible liquids, ultra low volume liquids, emulsifiable concentrates, dispersible concentrates, oil in water, and water in oil emulsions, microemulsions, suspension concentrates, aerosols, capsule suspensions and seed treatment formulations.

The formulation type chosen in any instance will depend upon the particular purpose envisaged and the physical, chemical and biological properties of the component.

Granules may be formed by granulating a component as described above together with one or more powdered solid diluents or carriers. One or more other additives may also be included in granules, for example an emulsifying agent, wetting agent or dispersing agent.

Dispersible concentrates may be prepared by mixing a component as described above in water or an organic solvent, such as a ketone, alcohol or glycol ether. These dispersions may contain a surface-active agent.

Suspension concentrates may comprise aqueous or non-aqueous suspensions of components as described above. Suspension concentrates may be prepared by combining the component in a suitable medium, optionally with one or more dispersing agents, to produce a suspension. One or more wetting agents may be included in the suspension and a suspending agent may be included to reduce the rate at which the components settle.

Aerosol versions of the components may further comprise a suitable propellant, for example n-butane. A formulation as described above may also be dispersed in a suitable medium, for example water or a water miscible liquid, such as *n*-propanol, to provide formulations for use in non-pressurised, hand-actuated spray pumps.

Agrochemical formulations of the components may further include one or more additives to improve the biological performance, for example by improving wetting, retention or distribution on surfaces. Such additives include surface active agents, spray additives based on oils, for example certain mineral oils or natural plant oils (such as soy bean and rape seed oil), and blends of these with other bio-enhancing adjuvants.

These individual formulations are suitably mixed together in a mixing tank with an agriculturally acceptable carrier such as water prior to application. Alternatively, in the case of solid formulations such as powders or dispersible granules, these may be applied to the growing plants directly, which are then dispersed by environmental water such as rain, or by artificial watering.

Application methods include any of those conventionally used in the art, but in particular include spraying.

In particular, the method of the invention can be used to control fungal and oomycete plant pathogens. Examples of such pathogens include the following:
*Pyricularia spp.* including *Pyricularia oryzue (Magnaporthe grisea);*
*Puccinia spp.* including *Puccinia triticina (or recondite), Puccinia stiiformis, Puccinia hordes, Puccinia striiformis; Erysiphe cichoracearum;*
*Blumeria (or Erysiphe) graminis (powdery mildew),*
*Sphaerotheca spp* including *Sphaerotheca macularis,*
*Sphaerotheca fusca and Sphaerotheca fuliginea,*
*Leveillula tapioca,*
*Podosphaera leucotricha,*
*Uncinula necator,*
*Cochliobolus Spp.,*
*Helminthosporium spp.,*
*Drechslera spp.,*
*Pyrenophora spp.,*
*Rhynchosporium spp.,*
*Mycosphaerella spp.* including *Mycosphaerella graminicola (Septoria tritici) and Mycosphaerella pomi,*
*Phaeosphaeria nodorum (Stagonospora nodorum or Septoria nodorum), Pseudocercosporella herpotrichoides ,*
*Gaeumannomyces graminis,*
*Cercospora spp.* including *Cercospora arachidicola* and *Cercosporidium personatum,*
*Botrytis spp.* including *Botrytis cinerea,*
*Alternaria spp,*
*Venturia spp.* (including *Venturia inaequalis (scab)),*
*Cladosporium spp.,*
*Monilinia spp.,*
*Didymella spp.,*
*Phoma spp.,*
*Aspergillus spp.,*
*Aureobasidium spp.,*
*Ascochyta spp.,*
*Stemphylium spp. (Pleospora spp.)*
*Glomerella cingulata*
*Gymnosporangium juniperi-virginianae,*
*Glocodes pomigena,*
*Schizothyrium pomi,*
*Botryosphaeria spp.* such as *Botryosphaeria obtusa* and *Botryosphaeria dothidea);*
*Plasinopara viticola,*
*Bremia lactucae,*
*Peronospora spp., Pseudoperonospora spp.* including *Pseudoperonospora humuli* and *Pseudoperonospora cubensis,*
*Pythium spp.* including *Pythium ultimum,*
*Phytophthora spp.* including *Phytophthora infestans.*
*Thanatephorus cucumeris,*
*Rhizoctonia spp.* including *Rhizoctonia solani;*
*Sclerotinia spp.* and *Sclerotium spp,*
*Gibberella fujikuroi,*
*Colletotrichum spp.,* including *Colletotrichum musue Laetisaria fuciformis,*
*Diaporthe spp,*
*Elsinoe spp.,*
*Verticillium spp.,*
*Pyrenopeziza spp.,*
*Oncobasidium theobromae,*
*Fusarium spp.,*
*Typhula spp.,*
*Microdochium nivale,*
*Ustilago spp., Urocystis spp.,*
*Tilletia spp.*
*Claviceps purpurea,*
*Ramularia spp.,*
*Penicillium spp.* including *Penicillium digitatum, Penicillium italicum, Trichoderma spp.* including *Trichoderma Tilde, Trichoderma pseudokoningii, Trichoderma viride* and *Trichoderma harzianum,*
*Gloeosporium spp.* including *Gloeosporium musarum;*
*Eutypa lata,*
*Guignardia bidwellii,*
*Phellinus igniarus,*
*Phomopsis viticola,*
*Pseudopeziza tracheiphila,*
*Stereum hirsutum,*
*Lophodermium seditiosum,*
*Cephaloascus fragrans,*
*Ceratocystis spp.,*
*Ophiostoma piceae,*
*Aspergillus niger,*
*Leptographium lindbergi,* and
*Aureobasidium pullulans.*

Fungal vectors of viral diseases (for example *Polymyxa* graminis acts as a vector of barley yellow mosaic virus (BYMV) which infects cereals and *Polymyxa betoe* which acts as the vector of rhizomania in sugar beet) may also be treated.

Particular fungi which may be controlled using the method of the invention include the phytopathogenic fungus *Magnaporthe grisea,* best known for causing rice blast, *Blumeria gramina,* an obligate pathogen which causes powdery mildew on barley and wheat, *Mycosphaerella graminicola* the cause of Septoria tritici blotch, one of the most common and important diseases of wheat worldwide, *Fusarium spp* which can cause wilts on a number of vegetables and ear blight on wheat, the soil fungus, *Rhizoctonia solani* which causes damping off in a number of crops, *Gaeumannomyces graminis* the 'take all' fungus of wheat, and the oomycete *Phytophthora infestans* the causal agent of 'late blight' and responsible for the Irish potato famine. A further important fungal species which has been found to be controllable using the method of the invention is *Botrytis cinerea,* a fungus that affects wine grapes and causes Botrytis bunch rot, as well as many vegetables and ornamental flowers.

The method is particularly suitable for the treatment of fungal spores. As a result, it is particularly useful for the prevention or prophylaxis of fungal disease.

For example, the phytopathogenic fungus *Magnaporthe grisea* is capable of infecting over 50 species of grass but is best known for causing rice blast the most important disease of cultivated rice. The life cycle of the disease begins when conidia, dispersed by wind, dew or rain splash attach to the hydrophobic leaf surface. The conidium germinates and the germ tube swells at its tip then differentiates into an appressorium, a melanised dome shaped cell that penetrates the leaf cuticle via the protrusion of a penetration peg. This process is largely mechanical, brought about by the generation of high turgor produced by the accumulation of glycerol within the appressorium. After the penetration peg has entered the plant cell, it differentiates into branched intercellular hyphae, which colonize the plant and eventually produce conidiophores to continue the life cycle.

Despite current efforts to control rice blast, which include the used of anti-penetrant fungicides and the breeding of resistant rice cultivars, this disease destroys, every year, between 11% and 30% of the rice harvest. Therefore a method for controlling this fungal species is particularly desirable. As illustrated below, the method of the invention was found to be particularly useful in this respect. In particular, the use of acidified nitrite as anti-penetrant fungicide was tested using plant infection assays and was shown to be completely effective in preventing symptom development when applied as an aerosol 1 hour after infection. As a consequence of the acidified nitrite on the plant, partial bleaching of some leaves was seen. However, it was subsequently shown that briefly washing the leaves with water, after the acidified nitrite was applied, could prevent scorching of the leaves.

The intolerance of fungal species such as *M.grisea* to acidified nitrite was dependent on the concentration of nitrite, and the sensitivity became more acute at lower pH levels, demonstrating the importance of the acidic environment for fungal killing. In the most acidic conditions tested, pH 3, the antifungal activity was observed at a sodium nitrite concentration of 4mM. The failure of conidia to recover from the exposure shows that the effect of the acidified nitrite was not simply to prevent germination of the conidia, but was fungitoxic, resulting in cell death.

The invention will now be particularly described by way of example with reference to the accompanying drawings in which:

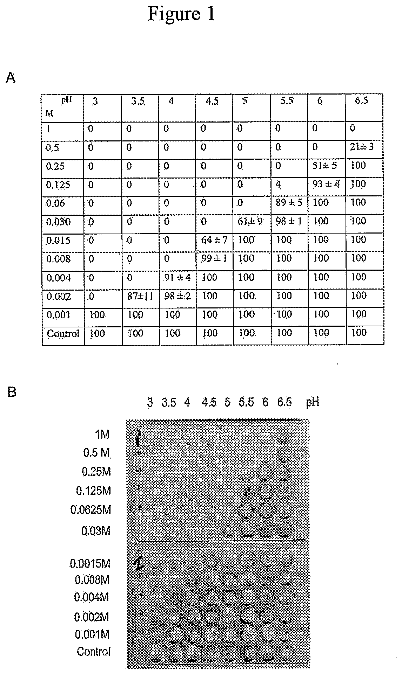

Figure 1 is a table and photograph illustrating the effect of acidified nitrite on *Magnaportha grisea.* Citrate buffer (50µl) at pH 3- 6.5 was added to a 48 well microtitre plate. *M. grisea* conidia were added at 1 x 10⁴ conidia in 5µl (2 x 10⁶ ml⁻¹). Sodium nitrate (10µl) was added so that the final concentration was 1M - 0.001M. Plates were incubated for 15 min at room temperature and the reaction stopped by the addition of 1 ml of complete medium (CM). In control wells (0) conidia were added to citrate buffer without the addition of sodium nitrite. Plates were incubated at 24°C for 24 h when germination of conidia was determined and expressed as percentage germinating (A). Samples from each well were transferred to replica plates with CM agar and incubated for 7 days (B).

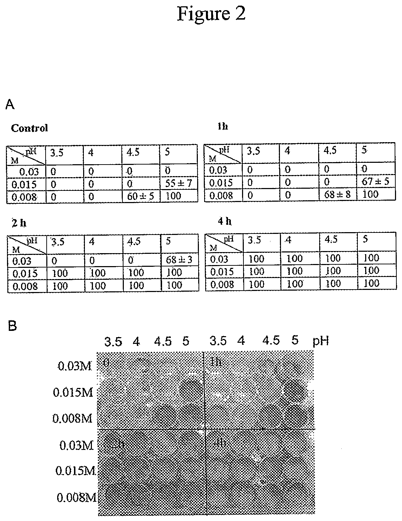

Figure 2 is a table and photograph illustrating the effect of acidified nitrite which had been stored for various time periods before application on *Magnaportha grisea.* Citrate buffer (50µl at pH 3.5 - 5) was added to a 48 well microtitre plate. Sodium nitrite (10µl) was added so the final concentration was 0.03M - 0.008M. *M. grisea* conidia were added at 1 x 10⁴ conidia in 5µl (2 x 10⁶ ml⁻¹) 1h, 2h and 4h after the addition of the acidified nitrite. Plates were incubated for 15 min at room temperature and the reaction stopped by the addition of 1 ml of complete media. In control wells (0) conidia were added to citrate buffer before addition of sodium nitrite. Plates were incubated at 24° for 24 h when germination of conidia was determined and expressed as a percentage germination (A). Samples from each well were transferred to replica plates with CM agar and incubated for 7 days (B).

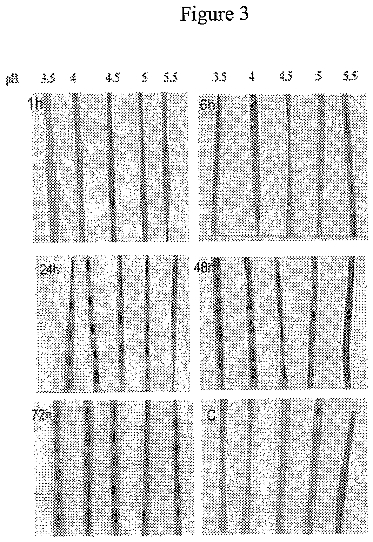

Figure 3 is a photograph showing the results of cut leaf pathogenicity assays of *M.grisea* treated with acidified nitrite. Leaf segments were excised from 14-day-old rice seedlings. Conidial suspensions were prepared from 10 day-old cultures and adjusted to 1 x 10⁴ ml⁻¹ and applied as 10µl droplets to the upper side of the leaf segment maintained on 4% (wt/vol) distilled water agar plates. Citrate buffer and NaNO₂ were premixed in microtitre plates and after removing the water from the leaf segment was applied to the point of inoculum 1, 6, 24, 48 and 72 hours post-inoculum. Disease lesions were scored after 4-5 days.

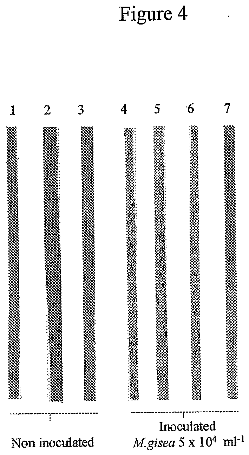

Figure 4 shows the effect of acidified nitrite on the pathogenicity of *M. grisea.* Trays of 14-day-old rice seedlings were sprayed with conidial suspensions of *M. grisea* prepared in 0.2% gelatine at concentrations of 5 x 10⁴ conidia ml⁻¹, then plants were incubated at 24°C with a 12-h light and 12-h dark cycle until disease symptoms became apparent. Plants were then sprayed with acidified nitrite by spraying infected plants one hour post infection. Citrate buffer and NaNO₂ were premixed in microtitre plates and applied to the plant using an artist airbrush. In control applications rice plants were sprayed with citrate buffer, acidified nitrite or 0.2% glycerol only. Infected plants were also treated with 0.2% glycerol and citrate buffer post-inoculum. The key is: Non-inoculated controls **-1.** Glycerol (0.2%), **2.** Citrate buffer (pH 4.5) **3.** NaNO₂ (0.03M) in citrate buffer pH 4.5 Inoculated - **4.** Srayed with *M. grisea* wild type Guy-11 at 5 x 10⁴ conidia ml⁻¹ **5.** Sprayed 1 hour post inoculum with glycerol (0.2%) **6.** Sprayed at 1 hour post-inoculum with citrate buffer pH 4.5, **7.** Sprayed at 1 hour post inoculum with NaNO₂ (0.03M) in citrate buffer (pH 4.5);

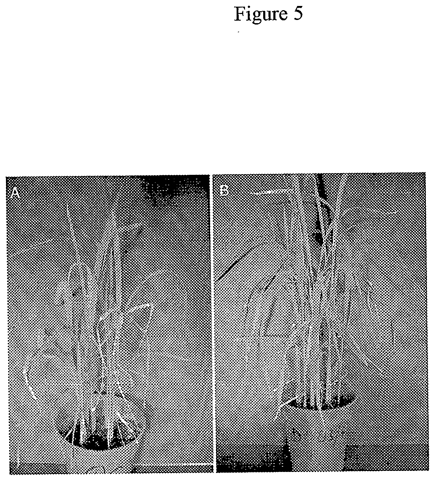

Figure 5 shows the effect of acidified nitrite on pathogenicity of *M. grisea* on rice where **A.** was sprayed with *M. grisea* wild type Guy-11 at 2 x 10⁵ conidia ml⁻¹, **B**. was sprayed **1** hour post inoculum with acidified nitrite NaNO₂ (0.03M) in citrate buffer (pH 4.5). 14-day-old rice seedlings were sprayed with conidial suspensions of *M. grisea* prepared in 0.2% gelatine at concentrations of 5 x 10⁴ conidia ml⁻¹, then plants were incubated at 24°C with a 12-h light and 12-h dark cycle until disease symptoms became apparent. Plants were then sprayed with acidified nitrite by spraying infected plants one hour post infection. Citrate buffer and NaNO₂ were pre-mixed in the microtitre plates and applied to the plant using an artist airbrush. A. Sprayed with *M. grisea* wild type Guy-11 at 2x10⁵ conidia ml⁻¹. B. Sprayed 1 hour post inoculum with acidified nitrite NaNO₂ (0.03M) in citrate buffer (pH4.5).

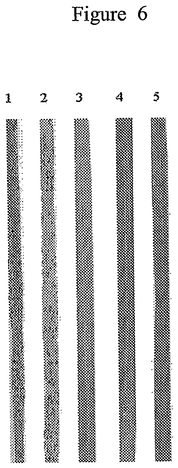

Figure 6 shows the effect of washing *M. grisea* infected rice plants after treatment with acidified nitrite. Trays of 14-day-old rice seedlings were sprayed with conidial suspensions of *M***.** *grisea* prepared in 0.2% gelatine at concentrations of 2 x 10⁵ conidia ml⁻¹. Plants were incubated at 24°C with a 12-h light and 12-h dark cycle until disease symptoms became apparent. Plants were treated with acidified nitrite (30mM/ pH4.5) by spraying infected plants one hour post infection. Citrate buffer and NaNO₂ were premixed in microtitre plates then applied to the plant using an artist airbrush. Leaves from the whole plant assay: 1. Infected with *M. grisea* wild type strain Guy-11, 2. Sprayed with water 1 h post inoculum sprayed with water after. 3. 1 h after acidified nitrite. 4. 2 h after acidified nitrite and 5. 24 h after acidified nitrite.

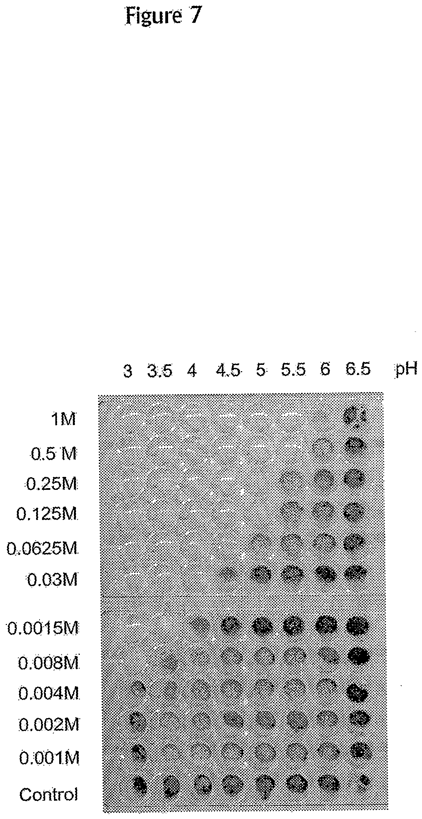

Figure 7 shows the results of the effect of acidified nitrite on Botrytis cinerea.

### Example 1

### Material and methods

### Fungal Isolates

Strains of *Magnaporthe grisea* used in this study are stored in the laboratory of N.J.Talbot (Exeter University, Exeter, UK) The fungus was grown on complete medium (CM) (Talbot, et al, 1993 The Plant Cell 5: 1575-1590).

### Exposure of M.grisea to acidified nitrite

Exposure experiments were performed in 48 well plates. Sterile solutions of 0.1 M citric acid and 0.1 M sodium citrate were used to prepare citrate buffers at pH 3, 3.5, 4, 4.5, 5, 5.5, 6, and 6.5. Exposure of *M. grisea* was performed in all citrate buffers at the following NaNO₂ concentrations: 1, 0.5, 0.25, 0.125, 0.06, 0.03, 0.015, 0.008, 0.004, 0.002 and 0.001M. *M. grisea* conidia were harvested from 10-day-old plates and the conidia counted and diluted to 2 x 10⁶ conidia ml⁻¹. Conidia (5µl - 1 x10⁴) were added to wells containing 50 µl citrate buffer. Sodium nitrite was added (10 µl) to each well from working stocks so that the final concentration was between the range 1-0.001 M. The wells were shaken briefly to mix component and incubated at room temperature for 15 minutes. As controls, conidia were added to each citrate buffer without addition of NaNO₂. At the end of the incubation 1ml of complete medium was added to each well to stop the reactions. From each well, 20µl was taken and applied to a 48 well plate containing CM agar. The plates were left at 24°C to allow for germination. The percentage germination was determined for each exposure after 24 hours. The 48 well plates containing agar were left for 7 days to allow for the fungus to colonise the media.

In order to determine how long acidified nitrite retains its activity *M. grisea* conidia were exposed to acidified nitrite at several time-points after the two components, citrate buffer and NaNO₂ were mixed. For this, citrate buffers used were at pH 3.5, 4, 4.5 and 5, at final NaNO₂ concentrations of 30, 15, and 8 mM. Fifty microlitres of citrate buffer was added to each well of a 48 well microtitre plate and then 10µl sodium nitrite added so that the final concentration was 30 - 8 mM. *M.grisea* conidia were added 5µl from a 2 x 10⁶ ml⁻¹ stock giving a concentration of 1 x 10⁴ conidia in each well. The wells were shaken briefly to mix components and incubated at room temperature for 15 minutes. As controls, conidia were added prior to the addition of NaNO₂ as described above. At the end of the incubation 1ml of complete media was added to each well to stop the reactions. From each well 20µl was taken and applied to a replica plate containing CM agar.

### Results

### Effect of acidified nitrite on the germination of conidia in M. grisea.

*M. grisea* sensitivity to acidified nitrite was directly dependent on the nitrite concentration. Conidia failed to germinate in citrate buffer containing 1M NaNO₂ at all pH levels (Fig. 1A). The concentration of nitrite required to prevent germination was directly dependent on the pH. In citrate buffer at pH 3 conidia failed to germinate at NaNO₂ levels as low as 2mM. In the citrate buffer controls and at NaNO₂ levels below 2mM, germination was seen at all pH levels. Samples from these exposure assays were transferred onto CM agar plates to determine whether the effect was due to delayed germination or whether the acidified nitrite was toxic to the spore. At exposure levels which inhibited germination after 24 hours, conidia failed to recover and colonise after seven days, demonstrating that a 15 minute exposure to acidified nitrite had resulted in complete kill (Fig.1B). At all pH levels this sporicidal effect on *M.grisea* was dose dependent, demonstrating that the antifungal properties were due to the products generated by the acidification of nitrite.

### Example 2

### Pre-mixed acidified nitrite has prolonged activity

The assay as described in Example 1 was repeated at selected NaNO₂ concentrations and pH levels to determine the activity of pre-mixed acidified nitrite. Conidia exposed to acidified nitrite, 1 hour after NaNO₂ was added to the buffer, demonstrated sensitivity to the antifungal activity of acidified nitrite similar to that of the control (Fig. 2A). Conidia failed to germinate after 24 hours in citrate buffer at levels between pH 3.5 and pH 5 when 30mM NaNO₂ had been added. At NaNO₂ concentrations of 15mM and 8mM, no germination was seen in citrate buffer at pH 4.5 and pH 4 respectively, in both the control and when conidia were exposed to acidified nitrite 1 hour after components were mixed. Conidia exposed to acidified nitrite 2 hours after components were mixed, showed no germination for 30mM NaNO₂ at pH levels below 4.5 but at lower NaNO₂ concentrations 100% germination was seen at all pH levels. Acidified nitrite that had been mixed 4 hours before conidia were added, failed to inhibit germination at all levels indicating that elements responsible for the toxicity of the acidified nitrite had been lost.

Samples from these exposure assays were transferred onto CM agar plates to determine if the pre-mixed acidified nitrite remained toxic to the spore. In some cases, exposure levels corresponding to acidified nitrite conditions which had completely inhibited germination after 24 hours, showed some recovery, and growth was observed (Fig 2B). Thus, for conidia that had been exposed to acidified nitrite 2 hours after the NaNO₂ was added to the buffer, the fungus regenerated even at 30mM and pH 3.5, when no germination had been observed after 24 hours. This was also the case when the exposure occurred 1 hour after the nitrite was added to the buffer, but only at the lowest NaNO₂ concentration of 8mM and at the higher pH levels in 15 and 30mM NaNO₂. When exposed to acidified nitrite at 30mM at pH 4.5 and 15mM at pH 4, 1 hour after the components were mixed, the conidia failed to germinate and regenerate (Fig. 2B).

### Example 3

### The effect of acidified nitrite on M. grisea infection, post-inoculum.

It is possible to assess the pathogenicity of *M.grisea* mutants by dropping conidia in suspension onto cut rice leaves. Pathogenic isolates will infect the leaf material and after 4 or 5 days will develop brown lesions, symptoms of rice blast disease. This method was applied to assess the effect of acidified nitrite on the pathogenicity of *M.grisea* on rice. It was also used to determine if the gaseous oxides generated from acidifying nitrite could be taken into the leaf and have a curative effect by preventing symptom development in leaves where infection was established.

Leaf segments were excised from the second leaf of a 14-day-old rice seedling approximately 1cm from its base. The rice cultivar CO39 was used due to its high susceptibility to pathogenic strains of *M. grisea.* Conidial suspensions were prepared from 10-day-old cultures and adjusted to 1 x 10⁴ ml⁻¹ and applied as 10µl droplets to the upper side of a the leaf segment maintained on 4% (wt/vol) distilled water agar plates. Citrate buffer and NaNO₂ were premixed in microtitre plates and after removing the water from the leaf segment was applied to the point of inoculum 1,6, 24, 48 and 72 hours post-inoculum. Disease lesions were scored after 4- 5 days.

Under these conditions, four to five days after inoculation, the fungus will have colonised the leaf and formed brown necrotic lesions, symptomatic of *M.grisea* infection. These lesions were apparent on leaves where the nitrite was applied 24, 48 and 72 h post inoculum (Fig.3). Leaves at 1 h and 6 h exposure did show some signs of pigmentation at the point of inoculum, but as this was also seen on the control where no inoculum had been applied, it was probably due to the effect of the acidified nitrite itself. Leaves including the control were discoloured, particularly at the more acidic pH levels. On leaves where acidified nitrite was applied 1 h and 6 h post-inoculum, there was little or no symptom development compared to the leaves where the acidified nitrite was applied at 24 h post-inoculum. These results suggested that acidified nitrite may act as an anti-penetrant during the early stages of appressorium formation and infection but did not have a curative effect and did not prevent symptom development where the fungus was established in its host.

### Example 4

### Rice infections

Pathogenicity of *M. grisea,* was tested by spraying fourteen-day-old rice seedlings of the susceptible cultivar CO39 with conidial suspensions. The effect of acidified nitrite on the pathogenicity of *M.grisea* was tested using a pathogenicity assay. Seedlings were infected with conidial suspensions of *M*. *grisea* prepared in 0.2% gelatin at concentrations of either 1 x 10⁴ or 2 x 10⁵ ml⁻¹ by spraying using an artist's airbrush. Plants were then incubated in a controlled environmental growth chamber at 24°C with a 12-h light and 12-h dark cycle until disease symptoms became apparent. Plants were treated with acidified nitrite by spraying infected plants 1 h post-infection. Citrate buffer and NaNO₂ were premixed in microtitre plates and applied to the plant using an artist airbrush. In control applications rice plants were sprayed with citrate buffer, acidified nitrite or 0.2% gelatin without prior *M. grisea* inoculum. Infected plants were also treated with 0.2% gelatin and citrate buffer post-inoculum.

In some experiments plants treated with acidified nitrite were sprayed with water to remove the fungicide from the leaf surface.

Plants inoculated with *M. grisea* conidia developed symptoms of rice blast 4- 5 days after infection. Symptom development also occurred on plants that were sprayed with citrate buffer and glycerol 1 h post-inoculum, and lesion numbers were similar to those on plants that had been sprayed only with *M.grisea* conidia (Fig. 4). On rice plants sprayed with acidified nitrite (30mM, pH4.5) subsequent to *M. grisea* infection, no symptoms of rice blast developed on any plant (Figs. 4 & 5). Plants sprayed with acidified nitrite did however show some scorching of leaves similar to that seen in the cut-leaf assay (Fig. 4). These were not extensive, but were clearly a consequence of the acidified nitrite, as plants sprayed with citrate buffer did not show signs of any discolouration (Fig. 4).

The plant infection assay was repeated, using a higher concentration of inoculum, 2 x10⁵ conidia ml⁻¹, which caused severe infection and eventually kills the plants. Infected plants that were subsequently sprayed with acidified nitrite (30mM) NaNO₂ in citrate buffer (pH 4.5), 1 hour post-inoculum, completely prevented the development of symptoms of rice blast at levels of inoculum high enough to kill the plant.

It was decided to spray plants with water, after treatment with acidified nitrite, in an effort to reduce the bleaching effect on the host plant, by diluting the fungicide once it had been in contact with the infected leaf at an exposure time long enough to kill the fungus. The exposure assay had demonstrated that the acidified nitrite is toxic to *M.grisea* after a 15 minute exposure, resulting in a 100% kill. Conidia and germlings on the surface of a rice leaf would be susceptible to the same sort of exposure. For this reason plants were washed with water 1 h, 5 h and 24 h after the treatment with acidified nitrite. The washing of infected and treated leaves resulted in no symptom development whilst preventing scorching of the leaves (Fig 6).

### Example 5

### The effect of acidified nitrite on Botrytis cinerea infection, post-inoculum.

The general procedure of Example 1 was repeated using 96 well plate assay to look at the effect of acidified nitrite on Botrytis cinerea. The result was similar to that for Magnaporths showing no growth from spores at certain concentrations of acidified nitrite, and that the concentration required to kill the fungus was lower at more acidic pH (08mM at pH3). The results are shown in Figure 7.

## Claims

1. A method for the control of microorganisms, fungi or oomycetes in agriculture, said method comprising applying to growing plants, an anti-microbial, anti-fungal or anti-oomycetes effective amount of a combination of:
(i) an agriculturally acceptable acidifying agent, and
(ii) an agriculturally acceptable source of nitrite ions or a nitrate precursor thereof,
wherein the agriculturally acceptable acidifying agent is in the form of a buffer solution and wherein the combination of (i) and (ii) has a pH of between 3.0 and 6.5 and acts as a source of nitric oxide.

2. A method according to claim 1 wherein the concentration of nitrite ions in the combination is at least 2mM.

3. A method according to claim 1 or claim 2 wherein (i) and (ii) are applied to a plant, and in a subsequent step, water is applied to the plant so as to wash the surface thereof.

4. A method according to claim 3 wherein the said subsequent step is carried out after one hour from application of (i) and (ii).

5. A method according to any one of the preceding claims wherein components (i) and (ii) are applied in the form of an active mixture.

6. A method according to claim 5 wherein the active mixture is applied within a period of 60 minutes from preparation.

7. A method according to any one of claims 1 to 4 wherein the components are applied individually to the plant.

8. A method according to any one of the preceding claims wherein the agriculturally acceptable acidifying agent is an organic acid or an inorganic acid.

9. A method according to any of claims 1-7 wherein the agriculturally acceptable acidifying agent is citric acid, phosphoric acid, sulphuric acid, salicylic acid, ascorbic acid, acetic acid, fulvic acid, lactic acid, glycolic acid or humic acid.

10. A method according to any one of the preceding claims wherein the agriculturally acceptable source of nitrite ions or a nitrate precursor thereof, is a ferment or compost composition.

11. A method according to any one of the preceding claims wherein the agriculturally acceptable source of nitrite ions or a nitrate precursor thereof is an alkali or alkaline earth metal nitrite or nitrate.

12. A method according to claim 11 wherein the alkali or alkaline earth metal nitrite or nitrate is selected from sodium nitrite, sodium nitrate, potassium nitrite or potassium nitrate.

13. A method according to any one of the preceding claims for prophylaxis of plant fungal or oomycete diseases.

14. A method according to claim 13 which is used to control fungi selected from *Magnaporthe grisea, Blumeria gramina Mycosphaerella graminicola Fusarium spp., Rhizoctonia solani Gaeumannomyces graminis, Botrytis cinerea* or the oomycete *Phytophthora infestans.*

## Patentansprüche

1. Verfahren zur Bekämpfung von Mikroorganismen, Pilzen oder Oomyzeten in der Landwirtschaft, umfassend das Aufbringen einer gegen Mikroben, gegen Pilze oder gegen Oomyzeten wirksamen Menge einer Kombination aus:
(i) einem landwirtschaftlich annehmbaren Säuerungsmittel und
(ii) einer landwirtschaftlich annehmbaren Nitritionenquelle oder einem Nitrat-Precursor davon
auf wachsenden Pflanzen, wobei das landwirtschaftlich annehmbare Säuerungsmittel in Form einer Pufferlösung vorliegt und wobei die Kombination aus (i) und (ii) einen pH-Wert zwischen 3,0 und 6,5 aufweist und als Stickoxidquelle wirkt.

2. Verfahren nach Anspruch 1, wobei die Konzentration von Nitritionen in der Kombination mindestens 2mM beträgt.

3. Verfahren nach Anspruch 1 oder 2, wobei (i) und (ii) auf eine Pflanze aufgebracht werden und in einem nachfolgenden Schritt Wasser auf die Pflanze aufgebracht wird, um deren Oberfläche zu waschen.

4. Verfahren nach Anspruch 3, wobei der nachfolgende Schritt eine Stunde nach der Aufbringung von (i) und (ii) durchgeführt wird.

5. Verfahren nach einem der vorhergehenden Ansprüche, wobei die Bestandteile (i) und (ii) in Form eines aktiven Gemisches aufgebracht werden.

6. Verfahren nach Anspruch 5, wobei das aktive Gemisch innerhalb eines Zeitraums von 60 Minuten ab der Herstellung aufgebracht wird.

7. Verfahren nach einem der Ansprüche 1 bis 4, wobei die Bestandteile einzeln auf die Pflanze aufgebracht werden.

8. Verfahren nach einem der vorhergehenden Ansprüche, wobei es sich bei dem landwirtschaftlich annehmbaren Säuerungsmittel um eine organische Säure oder eine anorganische Säure handelt.

9. Verfahren nach einem der Ansprüche 1 bis 7, wobei es sich bei dem landwirtschaftlich annehmbaren Säuerungsmittel um Zitronensäure, Phosphorsäure, Schwefelsäure, Salicylsäure, Ascorbinsäure, Essigsäure, Fulvinsäure, Milchsäure, Glykolsäure oder Huminsäure handelt.

10. Verfahren nach einem der vorhergehenden Ansprüche, wobei es sich bei der landwirtschaftlich annehmbaren Nitritionenquelle oder einem Nitrat-Precursor davon um eine Ferment- oder Kompostzusammensetzung handelt.

11. Verfahren nach einem der vorhergehenden Ansprüche, wobei es sich bei der landwirtschaftlich annehmbaren Nitritionenquelle oder einem Nitrat-Precursor davon um ein Alkali- oder Erdalkalimetallnitrit oder -nitrat handelt.

12. Verfahren nach Anspruch 11, wobei das Alkali- oder Erdalkalimetallnitrit oder -nitrat ausgewählt ist aus Natriumnitrit, Natriumnitrat, Kaliumnitrit oder Kaliumnitrat.

13. Verfahren nach einem der vorhergehenden Ansprüche zur Prophylaxe gegen Pilz- oder Oomyzetkrankheiten einer Pflanze.

14. Verfahren nach Anspruch 13, welches zur Bekämpfung von Pilzen verwendet wird, die ausgewählt sind aus *Magnaporthe grisea, Blumeria gramina Mycosphaerella graminicola Fusarium spp., Rhizoctonia solani Gaeumannomyces graminis, Botrytis cinerea* oder dem Oomyzeten *Phytophthora infestans.*

## Revendications

1. Méthode de lutte contre des micro-organismes, des champignons ou des oomycètes en agriculture, ladite méthode comprenant l'application sur des plantes en croissance d'une quantité efficace antimicrobienne, antifongique ou anti-oomycète d'une combinaison de :
(i) un agent acidifiant acceptable sur le plan agricole, et
(ii) une source d'ions nitrite acceptable sur le plan agricole ou un nitrate précurseur de celle-ci,
dans laquelle l'agent acidifiant acceptable sur le plan agricole est sous la forme d'une solution tampon et dans laquelle la combinaison de (i) et (ii) a un pH compris entre 3,0 et 6,5 et agit comme une source d'oxyde nitrique.

2. Méthode selon la revendication 1, dans laquelle la concentration des ions nitrite dans la combinaison est d'au moins 2 mM.

3. Méthode selon la revendication 1 ou 2, dans laquelle (i) et (ii) sont appliqués sur une plante et, dans une étape ultérieure, de l'eau est appliquée sur la plante de façon à laver la surface de celle-ci.

4. Méthode selon la revendication 3, dans laquelle ladite étape ultérieure est réalisée après une heure à compter de l'application de (i) et (ii).

5. Méthode selon l'une quelconque des revendications précédentes, dans laquelle les composants (i) et (ii) sont appliqués sous la forme d'un mélange actif.

6. Méthode selon la revendication 5, dans laquelle le mélange actif est appliqué dans une période de 60 minutes à compter de la préparation.

7. Méthode selon l'une quelconque des revendications 1 à 4, dans laquelle les composants sont appliqués individuellement sur la plante.

8. Méthode selon l'une quelconque des revendications précédentes, dans laquelle l'agent acidifiant acceptable sur le plan agricole est un acide organique ou un acide inorganique.

9. Méthode selon l'une quelconque des revendications 1 à 7, dans laquelle l'agent acidifiant acceptable sur le plan agricole est l'acide citrique, l'acide phosphorique, l'acide sulfurique, l'acide salicylique, l'acide ascorbique, l'acide acétique, l'acide fulvique, l'acide lactique, l'acide glycolique ou l'acide humique.

10. Méthode selon l'une quelconque des revendications précédentes, dans laquelle la source d'ions nitrite acceptable sur le plan agricole ou un nitrate précurseur de celle-ci est une composition de ferment ou de compost.

11. Méthode selon l'une quelconque des revendications précédentes, dans laquelle la source d'ions nitrite acceptable sur le plan agricole ou un nitrate précurseur de celle-ci est un nitrite ou un nitrate d'un métal alcalin ou d'un métal alcalino-terreux.

12. Méthode selon la revendication 11, dans laquelle le nitrite ou le nitrate d'un métal alcalin ou d'un métal alcalino-terreux est sélectionné parmi le nitrite de sodium, le nitrate de sodium, le nitrite de potassium ou le nitrate de potassium.

13. Méthode selon l'une quelconque des revendications précédentes pour la prophylaxie de maladies fongiques ou d'oomycètes végétales.

14. Méthode selon la revendication 13, qui est utilisée pour lutter contre des champignons sélectionnés parmi *Magnaporthe grisea, Blumeria gramina, Mycospharella graminicola Fusarium spp., Rhizoctonia solani, Gaeumannomyces graminis, Botrytis cinerea* ou l'oomycète *Phytophtora infestans.*
